Europäisches Patentamt

European Patent Office

Office européen des brevets

(19)

(11) **EP 1 491 374 A2**

(12) **EUROPEAN PATENT APPLICATION**

(43) Date of publication:
**29.12.2004 Bulletin 2004/53**

(51) Int Cl.[7]: **B60H 1/32**

(21) Application number: **04253580.7**

(22) Date of filing: **15.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **23.06.2003 JP 2003177741**

(71) Applicant: **Sanden Corporation**
**Isesaki-shi, Gunma 372-8502 (JP)**

(72) Inventors:
• **Imai, Tomonori c/o Sanden Corporation**
  **Isesaki-shi Gunma 372-8502 (JP)**
• **Inoue, Atsuo c/o Sanden Corporation**
  **Isesaki-shi, Gunma 372-8502 (JP)**

(74) Representative: **Haley, Stephen**
**Gill Jennings & Every,**
**Broadgate House,**
**7 Eldon Street**
**London EC2M 7LH (GB)**

(54) **Unit for calculating torque in refrigeration cycle and control unit using the same**

(57)    A unit for calculating a compressor torque in a refrigeration cycle having a variable displacement compressor, a condenser, a pressure reducing mechanism and an evaporator, wherein the compressor torque is calculated from a pressure difference between a refrigerant discharge pressure and a refrigerant suction pressure of the compressor or a physical value having a correlation with the pressure difference, and a control unit using the same. The compressor torque may be adequately estimated without using a flow sensor.

FIG. 2

```
                    START
                      |
                   A/C ON
                      |
      REFER TO OPENING DEGREE OF
      ACCELERATOR ACC,
      ENGINE ROTATIONAL SPEED Ne,
      COMPRESSOR TORQUE
      ESTIMATED VALUE Tr
                      |
      CALCULATION OF TARGET
      ENGINE OUTPUT TORQUE Tre
      Tre = f (ACC, Ne, Tr)
                      |
    N         Tre>k
                      | Y
      CALCULATION OF COMPRESSOR
      TORQUE TARGET VALUE Trc
      Trc = f (Tre)
                      |
    N         Trc<Tr
                      | Y
  DETECTION OF EVAPORATOR      CALCULATION OF EMPCV
  EXIT AIR TEMPERATURE         EMPCV = f (Trc)

  CONTROL OF EMPCV SO THAT
  EVAPORATOR EXIT AIR          OUTPUT OF EMPCV SIGNAL
  TEMPERATURE BECOMES          TO COMPRESSOR
  TARGET VALUE
```

EP 1 491 374 A2

## Description

The present invention relates to a unit for calculating a compressor torque in a refrigeration cycle and a control unit using the same, and, more specifically, to a compressor torque calculation unit which can adequately calculate a torque of a compressor incorporated into an air conditioning system for vehicles, and a control unit using the same.

When a torque of a compressor in a refrigeration cycle having a compressor, a condenser, a pressure reducing mechanism and an evaporator of refrigerant is determined, for example in JP-A-2001-317467, the compressor torque is calculated based on a high-pressure side refrigerant pressure, a low-pressure side refrigerant pressure and a refrigerant flow rate. This calculation of compressor torque is based on the following technical concept.

Namely, a compressor torque can be calculated by the following equation.

$$Tr = k \cdot Ps \{(Pd/Ps)^m - 1\} Vc$$

Where, Tr : compressor torque [kg-m],
Pd : discharge pressure,
Ps : suction pressure,
K, m: constant, and
Vc : discharge amount of compressor [cc].

The Vc can be calculated by the following equation.

$$Vc = Gr/(Nc \cdot F)$$

Where, Gr : refrigerant flow rate [kg/h],
Nc : compressor rotational speed [rpm], and
F : volume weight [kg/cm$^3$].

Further, because the volume weight F has a high correlation with Ps, the Tr can be calculated by the following equation.

$$Tr = k \cdot Ps \{(Pd/Ps)^m - 1\} Gr/(Nc \cdot Ps \cdot t)$$

Where, "t" is a constant.

Therefore, in order to calculate the torque, it is necessary to detect or estimate Pd, Ps, a refrigerant flow rate Gr and a compressor rotational speed Nc.

However, if the compressor torque is tried to be calculated by such a method, it is necessary to detect a refrigerant flow rate, and to detect the refrigerant flow rate, it is necessary to use a variable displacement compressor capable of controlling the flow rate or to provide a flow sensor. In particular, in the latter case, there is a problem that a pressure loss occurs in a refrigerant circuit.

Accordingly, it would be desirable to provide a unit for calculating a compressor torque in a refrigerant cycle which can adequately estimate a torque of a compressor without using a detected or estimated value of flow rate, particularly, without providing a flow sensor, and a control unit using the same.

A unit for calculating a compressor torque in a refrigeration cycle according to the present invention has a variable displacement compressor capable of controlling a discharged refrigerant amount, a condenser, a pressure reducing mechanism and an evaporator, and is characterized in that the compressor torque is calculated from a pressure difference between a refrigerant discharge pressure and a refrigerant suction pressure of the compressor or a physical value having a correlation with the pressure difference. In a case where the variable displacement compressor is a variable displacement compressor capable of controlling a pressure difference between a refrigerant discharge pressure and a refrigerant suction pressure of the compressor, a displacement control signal of the compressor can be used as the physical value having a correlation with the pressure difference.

Namely, in the present invention, the discharge pressure and the suction pressure of the compressor are detected or estimated, and a pressure difference between pressures at an exit and an entrance of the compressor, which is a difference between the discharge pressure and the suction pressure, is calculated. As the result of investigation of experimental data at various cooling load conditions and running conditions, it has been found that the pressure difference between pressures at an exit and an entrance of the compressor has a great correlation with a compressor torque. Therefore, in the present invention, a possibility has been sought to calculate a compressor torque from the pressure difference at exit and entrance of the compressor.

In the unit for calculating a compressor torque in a refrigeration cycle according to the present invention, it is possible to increase the accuracy of the estimation of the compressor torque by calculating a torque or a power of the compressor further referring to a rotational speed of the compressor.

The compressor torque calculated by such a compressor torque calculation unit in a refrigeration cycle according to the present invention may be utilized for an actual control of a compressor torque, and further, for a control of an output of an engine used as a drive source of a compressor in an air conditioning system for vehicles.

Namely, a control unit using the compressor torque calculation unit in a refrigeration cycle according to the present invention is structured wherein a compressor torque target value is set, a displacement control signal of the compressor is calculated from the compressor torque target value, and the calculated displacement control signal is outputted to the compressor so that a compressor torque estimated by the calculation becomes the compressor torque target value.

Further, the compressor torque calculation unit in a refrigeration cycle according to the present invention can be appropriately applied to a refrigeration cycle incorporated into an air conditioning system for vehicles. The control unit using the compressor torque calculation unit can also be appropriately applied for a compressor torque calculation unit in a refrigeration cycle incorporated into an air conditioning system for vehicles.

Such a control unit can be structured, for example, wherein a target engine output torque is calculated based on a compressor torque estimated by the calculation, and an engine is controlled based on a target engine output torque estimated by this calculation. Further, in a case where the compressor torque calculation unit and an engine ECU are provided separately, the estimated torque by the calculation may be outputted from the torque calculation unit to the engine ECU. By this, the engine ECU can decide an optimum engine output referring to the compressor torque.

In such a unit for calculating a compressor torque in a refrigeration cycle according to the present invention, it is possible to calculate a compressor torque at a high accuracy without detecting a refrigerant flow rate. Further, because it is not necessary to detect a refrigerant flow rate, the cost for providing a flow sensor may be saved, the whole of the system may be simplified, and a problem of a pressure loss accompanying with providing such a flow sensor does not occur. Moreover, in a case where a variable displacement compressor capable of controlling a pressure difference between a refrigerant discharge pressure and a refrigerant suction pressure is used, it is possible to calculate the torque directly from the displacement control signal sent to the compressor. Further, because the displacement control signal and the torque have a high correlation with each other, the torque may be controlled directly by the displacement control signal.

Further, by utilizing such a compressor torque calculation unit in a refrigeration cycle, a more optimum control of an actual compressor torque and an adequate control of an engine output in consideration of load to the engine may be possible.

Further features and advantages of the present invention will be understood from the following detailed description of the preferred embodiments of the present invention with reference to the accompanying figures, of which:

Fig. 1 is a schematic diagram of an air conditioning system for vehicles having a unit for calculating a compressor torque in a refrigeration cycle according to an embodiment of the present invention.

Fig. 2 is a flowchart of an example of a compressor torque control using a compressor torque calculation unit according to an embodiment of the present invention.

Fig. 3 is a graph showing a relationship between a target engine output torque and a compressor torque target value, showing an example for deciding a compressor torque target value in the flow depicted in Fig. 2.

Fig. 4 is a flowchart of an example of an engine output torque control using a compressor torque calculation unit according to an embodiment of the present invention.

Fig. 5 is a flowchart of another example of an engine output torque control using a compressor torque calculation unit according to an embodiment of the present invention.

Fig. 6 is a graph showing a relationship between an estimated compressor torque and an engine rotational speed target value, showing an example for controlling an engine rotational speed at idling in the present invention.

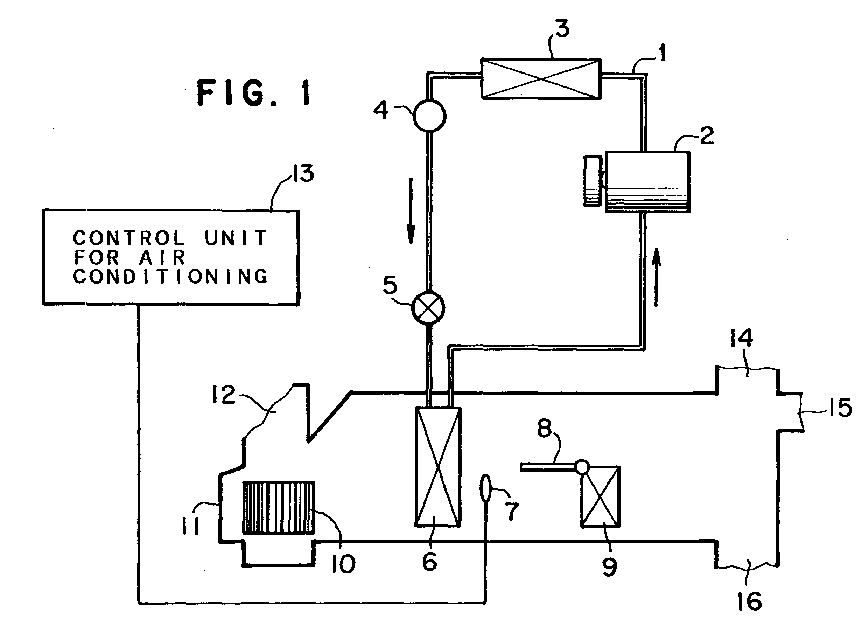

Fig. 1 depicts an air conditioning system for vehicles having a unit for calculating a compressor torque in a refrigeration cycle according to an embodiment of the present invention. A refrigeration cycle 1 has a variable displacement compressor 2 which can control a refrigerant discharge amount and which is driven by, for example, an engine of a vehicle, and a driving force of an engine is transmitted via an electromagnetic clutch incorporated into the compressor 2. Refrigerant is circulated in the refrigerant circuit of refrigeration cycle 1, a high-temperature and high-pressure refrigerant compressed by compressor 2 is cooled at a condenser 3 by heat exchange with outside air, and condensed and liquefied. The refrigerant in a two-phase condition of gas and liquid is separated into gas phase and liquid phase by a receiver dryer 4, and liquid refrigerant is reduced in pressure at a pressure reducing mechanism 5 (an expansion valve). The low-pressure refrigerant reduced in pressure flows into an evaporator 6, and heat exchanged with air sent by a blower 10. Refrigerant evaporated in evaporator 6 is sucked into compressor 2, and compressed again.

Blower 10 is disposed in an air duct 11 through which air for air conditioning of a vehicle interior passes, and air sucked from an air suction port 12 is sent to evaporator 6 by blower 10. A part of air having passed through evaporator 6 is a heater unit 9 disposed at a position downstream of evaporator 6. A rate of an amount of air passing through heater unit 9 to an amount of bypassing air is controlled by an air mixing damper 8. In this embodiment, an evaporator exit air temperature sensor 7 is provided to detect a temperature Teva of air immediately after passing through evaporator 6, and a signal of the detected temperature is inputted into a control unit for air conditioning 13. In this control unit for air conditioning 13, a unit for calculating a compressor torque in a refrigeration cycle according to the present invention is incorporated. Therefore, this control unit 13 also functions as a unit for calculating a compressor torque according to the present invention. Further, this control unit for air conditioning 13 may be structured as a calculation unit for also controlling an engine of a vehicle, and an engine ECU may be provided separately. Respective air discharge ports 14, 15 and 16 such as a DEF-mode air discharge port, a VENT-mode air discharge port, and a FOOT-mode air discharge port, and these air discharge ports are controlled to be opened/closed by respective dampers (not shown).

In such an air conditioning system for vehicles having the above-described refrigeration cycle, a torque of compressor 2 is calculated and estimated as follows.

Calculation of torque

Example 1:

A pressure difference between a discharge pressure Pd and a suction pressure Ps of the compressor is detected, and a torque is calculated from the pressure difference. A compressor torque Tr can be calculated by the following equation.

$$Tr = f (Pd, Ps)$$

For example,

$$Tr = a * (Pd - Ps)^2 + b * (Pd - Ps) + m$$

Where, Tr : torque,
    Pd : discharge pressure,
    Ps : suction pressure, and
    a, b, m: constant determined by experiment.

A value detected by a pressure sensor may be used as the discharge pressure Pd. The suction pressure Ps may be detected by a pressure sensor, or may be estimated from an evaporator temperature or a temperature of air immediately after passing through the evaporator or a refrigerant temperature in the evaporator.

The estimation of refrigerant suction pressure Ps can be carried out as follows. Namely, because refrigerant at the evaporator is in a two-phase condition of gas and liquid, a refrigerant pressure is determined univocally from a refrigerant temperature in the evaporator. Therefore, it is possible to estimate a refrigerant pressure in the evaporator by detecting a temperature of air after passing through the evaporator or a temperature of an evaporator surface or a refrigerant temperature in the evaporator. Further, in an actual refrigeration cycle, there occurs a pressure reduction of refrigerant due to a pressure loss in a circuit from the evaporator to a compressor. Since this pressure loss becomes greater as a refrigerant flow rate increases, it is possible to estimate the pressure loss by detecting the refrigerant flow rate. Consequently, the refrigerant suction pressure of the compressor has a close correlation with the refrigerant temperature and the refrigerant flow rate in the evaporator, and by detecting or estimating these two values, it becomes possible to adequately estimate the refrigerant suction pressure.

More concretely, the refrigerant suction pressure is estimated, for example, by using the following equation.

$$Ps' = a \cdot Gr + b \cdot Teva + c$$

Where, Ps': an estimated value of refrigerant suction pressure,
    Gr : a refrigerant flow rate,
    Teva: an air temperature at an evaporator exit, or a temperature at an evaporator surface, or a temperature of refrigerant in the evaporator, and
    a, b, c: a constant determined by an experiment. The refrigerant flow rate Gr may be estimated from an opening degree of pressure reducing mechanism 5 (an expansion valve), or may be estimated from a displacement control signal of the variable displacement compressor.

Example 2:

In a case where a variable displacement compressor capable of controlling a pressure difference between a discharge pressure Pd and a suction pressure Ps, because the pressure difference between Pd and Ps is controlled, the compressor torque can be calculated directly from the displacement control signal. A compressor torque Tr can be calculated by the following equation.

$$Tr = f (EMPCV)$$

For example,

$$Tr = a * EMPCV^2 + b * EMPCV + c$$

Where, EMPCV : compressor displacement control signal, and
    a, b, c: a constant determined by an experiment.

Further, the compressor torque can be increased in estimation accuracy by referring to a compressor rotational speed (or an engine rotational speed).

$$Tr = f (EMPCV, Nc),$$

or

$$Tr = f (EMPCV, Ne).$$

For example,

$$Tr = a * EMPCV^2 + b * EMPCV + c * Ne + m$$

Where, EMPCV : compressor displacement control signal,

Nc : compressor rotational speed,

Ne : engine rotational speed, and

a, b, c: a constant determined by an experiment.

Further, the compressor torque and a compressor power have the following relationship.

$$P = k * Nc * Tr$$

Where, P : compressor power,

k : a constant

Nc: compressor rotational speed, and

Tr: compressor torque.

Therefore, it is possible to calculate the compressor power P similarly to that of the torque by the following equation.

$$P = f (EMPCV, Nc),$$

or

$$P = f (EMPCV, Ne).$$

Further, in the present invention, utilizing the above-described estimation of compressor torque, a control of an actual compressor torque or an output control of an engine can be carried out, for example, as follows.

Control using the calculated torque value (common to the above-described Examples 1 and 2)

(1) Compressor torque control:

A compressor torque target value is set, a compressor displacement control signal is calculated from the torque target value, and the calculated displacement control signal is outputted to a compressor. Where, the compressor torque target value is a value set in accordance with a load to an engine, etc. Namely, when the engine load is very great such as at the time of acceleration or climbing, for the purpose of reduction of the engine load, a relatively small torque target value is set. This torque target value may be set smaller as the engine load increases. It is possible to detect the engine load by an actuating amount of an accelerator, an engine rotational speed or a vehicle running speed. Further, in a case where a variable displacement compressor capable of controlling a pressure difference between a discharge pressure and a suction pressure, as aforementioned, because the pressure difference between a discharge pressure and a suction pressure has a great correlation with the torque, the displacement control signal can be calculated directly from the target torque.

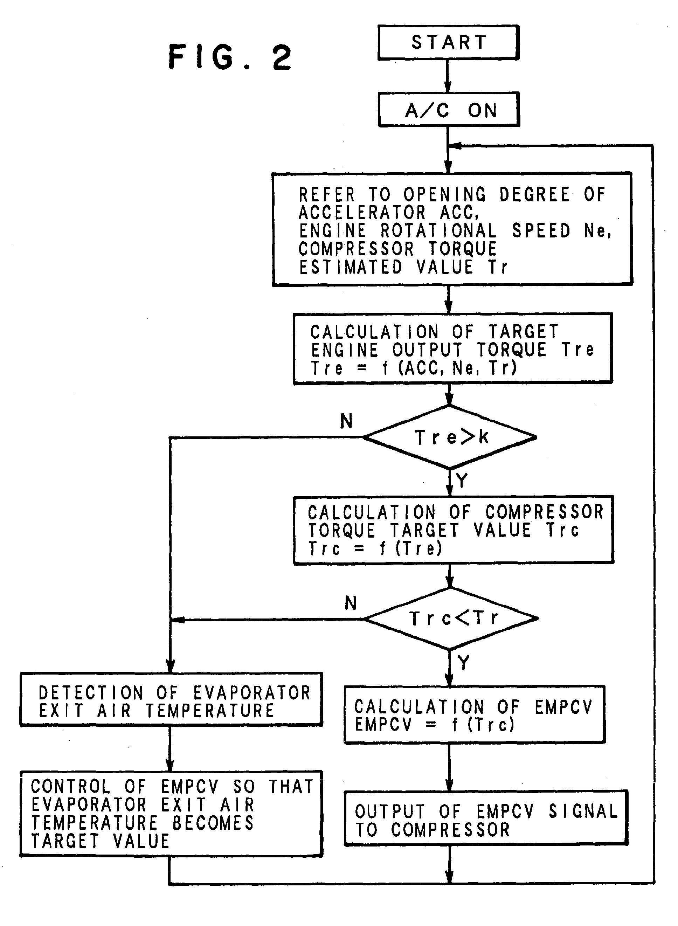

For example, as shown in Fig. 2, when a target engine output torque Tre is more than "k" and it is very great (at the time of rapid acceleration and climbing), a upper limit is provided to the compressor torque. Namely, as a control flow, for example, as shown in Fig. 2, at the time of A/C (air conditioner) ON (compressor ON), the target engine output torque Tre is calculated referring to an opening degree of accelerator ACC, an engine rotational speed Ne and a compressor torque estimated value Tr. In a case where the Tre is more than a predetermined set value "k", the compressor torque target value Trc is calculated, and the Trc is set as the compressor torque upper limit. Where, the Trc is calculated from target engine output torque Tre. In a case where the Trc, which is the torque upper limit, is more than a present compressor torque Tr, EMPCV is calculated from Trc and the EMPCV signal is outputted to the compressor so that the compressor torque becomes Trc. In cases where Tre is "k" or less and where the calculated Trc is the present torque Tr or more, the displacement control signal is controlled so that an evaporator exit air temperature becomes a target value.

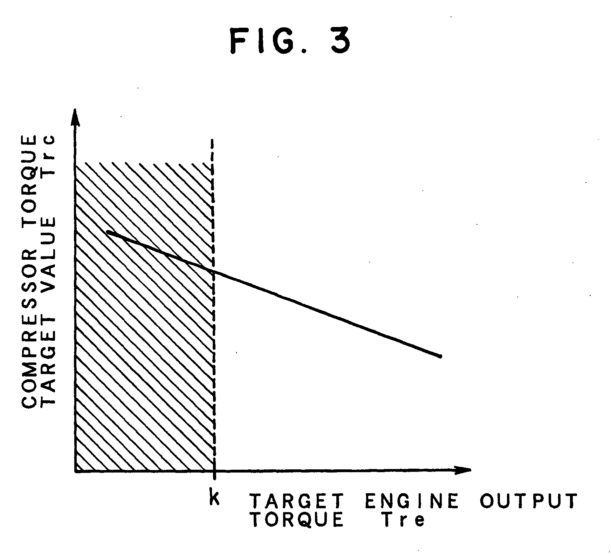

In the flow shown in Fig. 2, the compressor torque target value Trc is decided relative to the target engine output torque Tre, for example, as shown in Fig. 3. In the hatching region in Fig. 3, the displacement control signal is controlled so that the evaporator exit air temperature becomes the target value.

(2) Engine output control referring to the compressor torque information (common to the above-described Examples 1 and 2):

In an engine ECU for example, a value obtained by adding a compressor torque estimated value to a calculated target engine output torque is set as a final torque target value. By this, even if the torque for driving a compressor varies, because a drive force for driving a vehicle is constant, it becomes possible to improve drivability. Further, at the time of idling, because an engine rotational speed can be set at a lower value depending upon the compressor torque estimated value (because an engine stall does not occur even if the rotational speed is set low when the compressor torque is small), a fuel consumption may be improved. Where, an engine ECU may directly calculate the compressor torque estimated value, or the torque estimated value may be outputted from the control unit for air conditioning to the engine ECU.

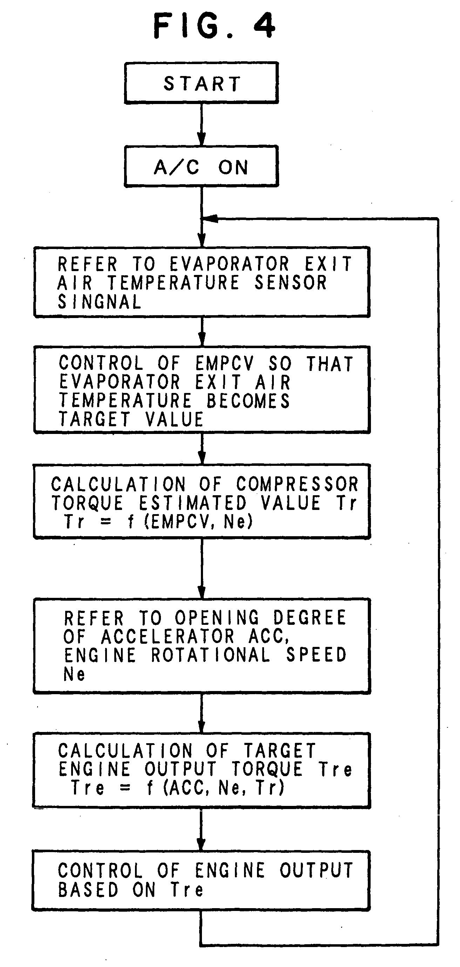

For example, in Fig. 4, a control flow, in an example of a case where the compressor torque calculation unit and an engine ECU are constructed integrally, is shown. As shown in Fig. 4, at the time of A/C (air conditioner) ON (compressor ON), referring to an evaporator exit air temperature, a displacement control signal is controlled so that the evaporator exit air temperature becomes a target value. The compressor torque Tr is calculated from a present displacement control signal EMPCV. Referring to an opening degree of accelerator ACC and an engine rotational speed Ne, a target engine output torque Tre is calculated from the calculated Tr. Then, an engine output is controlled based on this target engine output torque Tre.

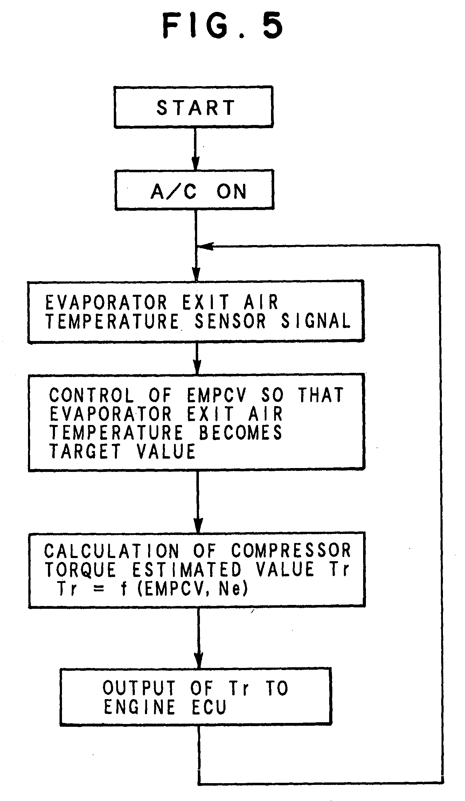

Further, in Fig. 5, an example of a control flow, in a case where a compressor torque calculation unit and an engine ECU are provided separately, is shown. As shown in Fig. 5, at the time of A/C (air conditioner) ON (compressor ON), first, referring to an evaporator exit air temperature, a displacement control signal is controlled so that the evaporator exit air temperature becomes a target value. The compressor torque Tr is calculated from a present displacement control signal EMPCV. Then, the calculated compressor torque Tr is outputted to the engine ECU.

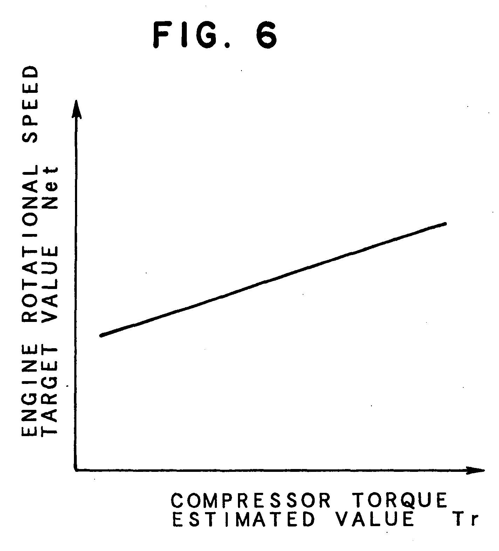

Further, Fig. 6 shows an example of an engine rotational speed control at the time of idling. An engine rotational speed target value Net at the time of idling can be decided from the compressor torque estimated value as shown in Fig. 6.

## Claims

1. A unit for calculating a compressor torque in a refrigeration cycle having a variable displacement compressor capable of controlling a discharged refrigerant amount, a condenser, a pressure reducing mechanism and an evaporator, **characterized in that** said compressor torque is calculated from a pressure difference between a refrigerant discharge pressure and a refrigerant suction pressure of said compressor or a physical value having a correlation with said pressure difference.

2. The unit for calculating a compressor torque in a refrigeration cycle according to claim 1, wherein said variable displacement compressor is a variable displacement compressor capable of controlling a pressure difference between a refrigerant discharge pressure and a refrigerant suction pressure of said compressor, and said physical value having a correlation with said pressure difference is a displacement control signal of said compressor.

3. The unit for calculating a compressor torque in a refrigeration cycle according to claim 1 or 2, wherein a torque or a power of said compressor is calculated further referring to a rotational speed of said compressor.

4. The unit for calculating a compressor torque in a refrigeration cycle according to any of claims 1 to 3, wherein a compressor torque target value is set, a displacement control signal of said compressor is calculated from said compressor torque target value, and said calculated displacement control signal is outputted to said compressor so that a compressor torque estimated by said calculation becomes said compressor torque target value.

5. The unit for calculating a compressor torque in a refrigeration cycle according to any of claims 1 to 4, wherein said refrigeration cycle is a refrigeration cycle incorporated into an air conditioning system for vehicles.

6. A control unit using the unit for calculating a compressor torque in a refrigeration cycle according to claim 5, wherein said refrigeration cycle is a refrigeration cycle incorporated into an air conditioning system for vehicles.

7. The control unit according to claim 6, wherein a target engine output torque is calculated based on a compressor torque estimated by said calculation, and an engine is controlled based on a target engine output torque estimated by said calculation.

8. The control unit according to claim 6, wherein a compressor torque estimated by said calculation is outputted to an engine ECU.

FIG. 1

CONTROL UNIT
FOR AIR
CONDITIONING

EP 1 491 374 A2

# FIG. 2

START

↓

A/C ON

↓

REFER TO OPENING DEGREE OF
ACCELERATOR ACC,
ENGINE ROTATIONAL SPEED Ne,
COMPRESSOR TORQUE
ESTIMATED VALUE Tr

↓

CALCULATION OF TARGET
ENGINE OUTPUT TORQUE Tre
Tre = f (ACC, Ne, Tr)

↓

Tre>k — N

↓ Y

CALCULATION OF COMPRESSOR
TORQUE TARGET VALUE Trc
Trc = f (Tre)

↓

Trc<Tr — N

↓ Y

DETECTION OF EVAPORATOR
EXIT AIR TEMPERATURE

CALCULATION OF EMPCV
EMPCV = f (Trc)

↓

CONTROL OF EMPCV SO THAT
EVAPORATOR EXIT AIR
TEMPERATURE BECOMES
TARGET VALUE

OUTPUT OF EMPCV SIGNAL
TO COMPRESSOR

8

# FIG. 3

# FIG. 4

```
┌──────────────┐
│    START     │
└──────────────┘
        │
        ▼
┌──────────────┐
│   A/C  ON    │
└──────────────┘
        │
        ▼
┌─────────────────────────────┐
│ REFER TO EVAPORATOR EXIT    │
│ AIR TEMPERATURE SENSOR      │
│ SINGNAL                     │
└─────────────────────────────┘
        │
        ▼
┌─────────────────────────────┐
│ CONTROL OF EMPCV SO THAT    │
│ EVAPORATOR EXIT AIR         │
│ TEMPERATURE BECOMES         │
│ TARGET VALUE                │
└─────────────────────────────┘
        │
        ▼
┌─────────────────────────────┐
│ CALCULATION OF COMPRESSOR   │
│ TORQUE ESTIMATED VALUE Tr   │
│   Tr = f (EMPCV, Ne)        │
└─────────────────────────────┘
        │
        ▼
┌─────────────────────────────┐
│ REFER TO OPENING DEGREE     │
│ OF ACCELERATOR ACC,         │
│ ENGINE ROTATIONAL SPEED     │
│ Ne                          │
└─────────────────────────────┘
        │
        ▼
┌─────────────────────────────┐
│ CALCULATION OF TARGET       │
│ ENGINE OUTPUT TORQUE Tre    │
│   Tre = f (ACC, Ne, Tr)     │
└─────────────────────────────┘
        │
        ▼
┌─────────────────────────────┐
│ CONTROL OF ENGINE OUTPUT    │
│ BASED ON Tre                │
└─────────────────────────────┘
```

# FIG. 5

```
        ┌──────────────────┐
        │      START       │
        └──────────────────┘
                 │
                 ▼
        ┌──────────────────┐
        │     A/C  ON      │
        └──────────────────┘
                 │
                 ▼
        ┌────────────────────────────┐
        │  EVAPORATOR EXIT AIR        │
        │  TEMPERATURE SENSOR SIGNAL  │
        └────────────────────────────┘
                 │
                 ▼
        ┌────────────────────────────┐
        │  CONTROL OF EMPCV SO THAT   │
        │  EVAPORATOR EXIT AIR        │
        │  TEMPERATURE BECOMES        │
        │  TARGET VALUE               │
        └────────────────────────────┘
                 │
                 ▼
        ┌────────────────────────────┐
        │  CALCULATION OF COMPRESSOR  │
        │  TORQUE ESTIMATED VALUE Tr  │
        │    Tr = f (EMPCV, Ne)       │
        └────────────────────────────┘
                 │
                 ▼
        ┌────────────────────────────┐
        │     OUTPUT OF Tr TO         │
        │     ENGINE ECU              │
        └────────────────────────────┘
```

EP 1 491 374 A2

# FIG. 6

12